# EUROPÄISCHE PATENTSCHRIFT

(11) **EP 3 455 478 B1**
(45) Veröffentlichungstag und Bekanntmachung des Hinweises auf die Patenterteilung: **02.09.2020**
(21) Anmeldenummer: 17718898.4
(22) Anmeldetag: 20.04.2017
(51) Int. Cl.: F02B 37/02, F02B 37/22, F01D 17/10, F16K 1/20, F02B 37/18, F16K 1/48, F16K 11/052

(54) **TURBINE FÜR EINEN ABGASTURBOLADER MIT ZWEIFLUTIGEM TURBINENGEHÄUSE UND VENTIL-ANORDNUNG ZUR FLUTENVERBINDUNG UND WASTEGATE-STEUERUNG**
TURBINE FOR A TURBOCHARGER WITH TWO SCROLLS HOUSING AND VALVE ARRANGEMENT FOR SCROLL CONNEXION AND WASTEGATE CONTROL
TURBINE POUR UN TURBOCOMPRESSEUR AVEC UN CARTER DEUX VOLUTES ET AGENCEMENT DE VANNE POUR LA CONNECTION DES DEUX VOLUTES ET CONTRÔLE DE VANNE DE DÉCHARGE

(30) Priorität: 12.05.2016 DE 102016208158
(43) Veröffentlichungstag der Anmeldung: 20.03.2019
(73) Patentinhaber: Vitesco Technologies GmbH, 30165 Hannover (DE)
(72) Erfinder: SPARRER, Christoph, 93057 Regensburg (DE)
(74) Vertreter: Waldmann, Georg Alexander
(86) Internationale Anmeldenummer: PCT/EP2017/059401
(87) Internationale Veröffentlichungsnummer: WO 2017/194288

(56) Entgegenhaltungen:
- WO-A1-2013/135548
- WO-A1-2013/139762
- WO-A1-2015/009697
- WO-A1-2016/094265
- DE-U1-202014 009 873
- US-A1- 2014 230 432

## Beschreibung

Die Erfindung betrifft eine Turbine für einen Abgasturbolader mit zweiflutigem Turbinengehäuse und einer Ventil-Anordnung zur Flutenverbindung und Wastegate-Steuerung.

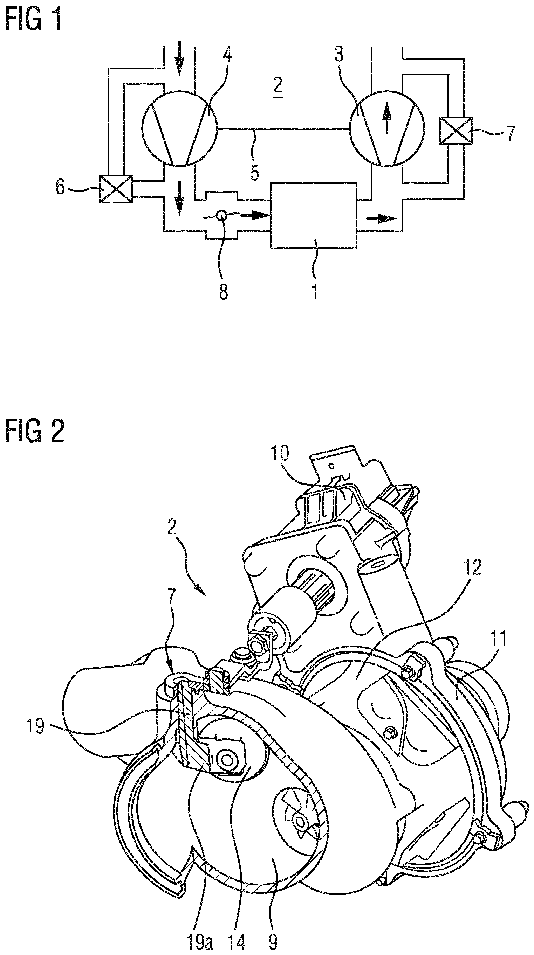

Ein Verbrennungsmotor 1, der von einem Abgasturbolader 2 aufgeladen wird, zeichnet sich durch die in der Figur 1 dargestellte Anordnung der Führung von Frischluft und Abgasen aus. Im aufgeladenen Betrieb strömt das Abgas aus dem Verbrennungsmotor 1 über die Turbine 3, welche den Verdichter 4 im Ansaugtrakt vor dem Einlass des Motors 1 über eine gemeinsame Welle 5 antreibt. Durch die Verdichtung der Ansaugluft kann mehr Kraftstoff pro Zylinderhub zugemischt werden und das Drehmoment des Motors 1 wird erhöht.

In der Figur 1 sind aus Gründen der Übersichtlichkeit einige Elemente der Luftführung nicht dargestellt. Dies sind zum Beispiel ein vor dem Verdichter angeordneter Luftfilter, ein vor dem Verdichter angeordneter Luftmengenmesser, ein hinter dem Verdichter angeordneter Ladeluftkühler, ein Tank, eine hinter der Drosselklappe angeordnete Kurbelgehäuse-Entlüftung und ein hinter der Turbine angeordneter Katalysator. Auf eine Darstellung einer gegebenenfalls vorhandenen Abgasrückführung oder Sekundärlufteinblasung wurde ebenfalls verzichtet.

Im aufgeladenen Betrieb ist die Drosselklappe 8 vollständig geöffnet. Die Regelung der Aufladung kann zum Beispiel durch Abblasen eines Teils des Abgasmassenstroms durch ein Wastegate-System 7 erfolgen.

Auf der Verdichterseite ist desweiteren ein sogenanntes Schubumluft-System 6 angeordnet, über das überschüssige, verdichtete Ansaugluft abgeblasen und in den Ansaugtrakt zurückgeführt werden kann.

In der Fig. 2 ist eine mögliche Ausführungsform eines Abgasturboladers 2 nach dem Stand der Technik dargestellt. Diese Darstellung enthält einen Schnitt im Bereich des Wastegate-Systems. Das genannte Wastegate-System 7 ist im Turbinengehäuse 9 angeordnet. Das Wastegate-System wird über einen Wastegate-Aktuator 10 betätigt, der unter Verwendung eines Halters am Verdichtergehäuse 11 befestigt ist. Zwischen dem Turbinengehäuse 9 und dem Verdichtergehäuse 11 befindet sich eine Lagerbaugruppe 12, in welcher die gemeinsame Läuferwelle von Turbinenrad und Verdichterrad untergebracht ist.

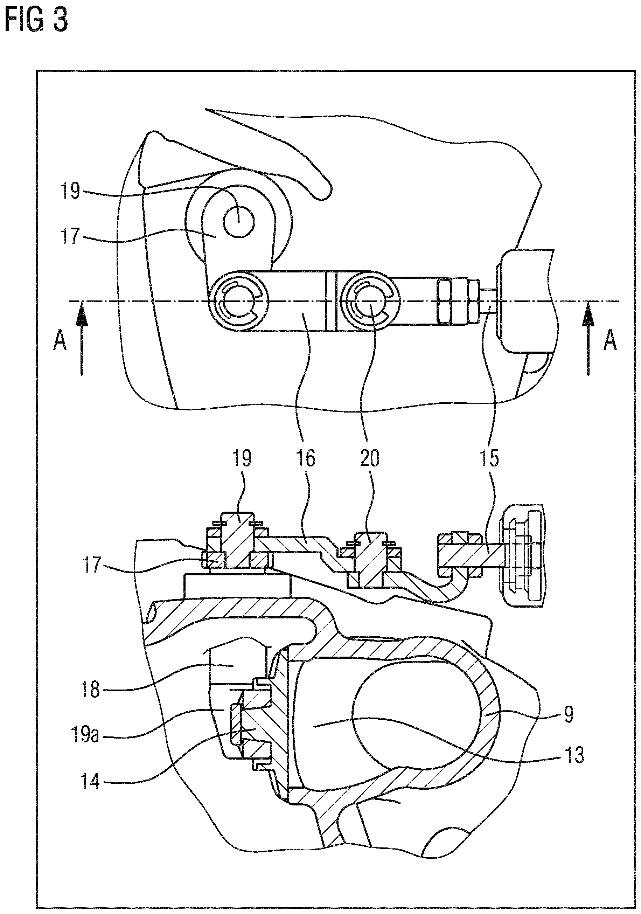

Die Figur 3 zeigt das Wastegate-System 7 in einer Draufsicht sowie in einer Schnittdarstellung der Seitenansicht. Dargestellt ist die Wastegate-Öffnung 13 im Turbinengehäuse 9, die über einen Klappenteller 14 freigegeben oder verschlossen werden kann. So kann bei Bedarf ein Teil des Abgasmassenstroms am Turbinenlaufrad vorbei geleitet werden. Die Öffnungs- bzw. Schließ-Betätigung des Klappentellers 14 erfolgt über eine Linearbewegung einer Regelstange 15, die von einem pneumatischen oder elektrischen Wastegateaktuator gesteuert angetrieben wird. Diese Linearbewegung wird über eine Verbindungsplatte 16 an einen äußeren Wastegatehebel 17 übertragen. Die in einer Buchse 18 gelagerte Wastegatespindel 19 überträgt die Drehbewegung mittels des Schwenkarms 19a auf den Klappenteller 14. Aufgrund der linear geführten Regelstange 15 ist zusätzlich ein Ausgleichsgelenk 20 in der Kinematik erforderlich, um einen Schränkungsausgleich zu gewährleisten.

Die vorstehenden Ausführungen beziehen sich auf Abgasturbolader mit einflutigem Turbinengehäuse, das nur einen schneckenförmig um das Turbinenlaufrad 9c angeordneten Abgas-Zuführkanal, eine sogenannte Abgasflute aufweist. Entsprechende Abgasturbinen werden auch als Monoscroll-Turbinen bezeichnet.

Diese Technologie hat den Nachteil, dass sich die Ladungswechsel, sprich der Austausch von Abgas und Brennstoff-Gas-Gemisch, der einzelnen Zylinder des Verbrennungsmotors im Betrieb durch den pulsierenden Abgasgegendruck gegenseitig negativ beeinflussen. Dies wirkt sich nachteilig auf die Befüllung der Zylinder des Motors mit Brennstoff-Gas-Gemisch aus, wodurch wiederum dessen Verbrauch, Ansprechverhalten und Nennleistung verschlechtert wird.

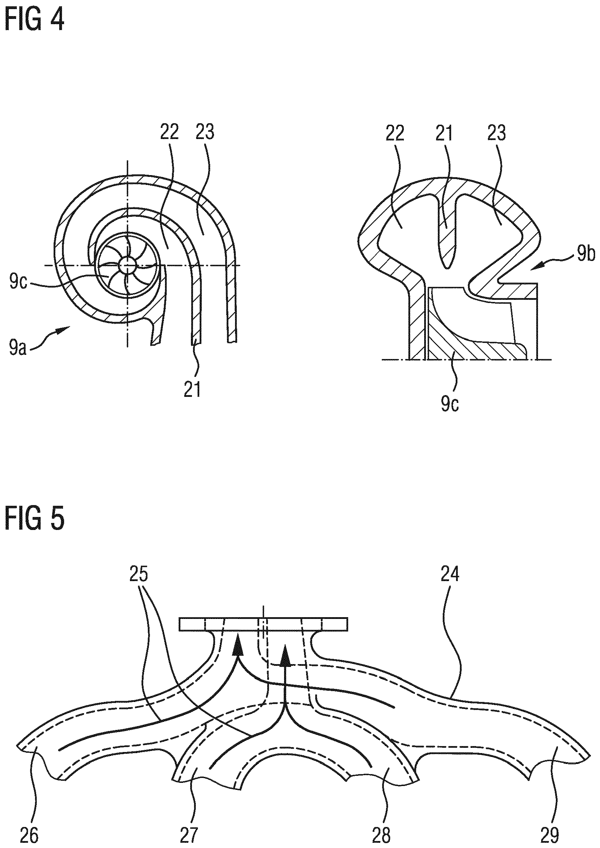

Um dieses Problem zu beheben oder zumindest zu verringern, können zweiflutige oder mehrflutige Turbinengehäuse verwendet werden, die entsprechend zwei oder mehr voneinander getrennte Abgasfluten aufweisen. Dabei unterscheidet man zwischen Segmented-Scroll-Turbinengehäusen 9a und Twin-Scroll-Turbinengehäusen 9b, wie es in der Figur 4 veranschaulicht ist.

Beide Turbinen enthalten eine Trennwand 21, die zwischen den beiden Abgasfluten 22 und 23 vorgesehen ist. Bei dem Segmented-Scroll-Turbinengehäuse 9a ist die Trennwand 21 so angeordnet, dass das Turbinenlaufrad 9c von beiden Abgasfluten 22, 23 auf je 180° über die volle Radeintrittsbreite beaufschlagt wird. Bei der Twin-Scroll-Turbinengehäuse 9b ist die Trennwand 21 in radialer Richtung zum Turbinenlaufrad 9c angeordnet, wodurch dieses von beiden Abgasfluten 22, 23 auf 360° auf einem Anteil, z.B. je 50%, der Radeintrittsbreite beaufschlagt wird. Bei beiden Turbinen-Bauarten kommt -wie es aus der Figur 5 ersichtlich ist- ein Abgaskrümmer 24 zum Einsatz, bei dem bei Vierzylinder-Motoren jeweils zwei Zylinder und bei Sechszylinder-Motoren jeweils drei Zylinder zu einem Strang zusammengefasst sind. Jeder Strang ist wiederum mit einer Abgasflute des zweiflutigen Turbinengehäuses verbunden. Dadurch wird gewährleistet, dass sich die pulsierenden Abgas-Massenströme der einzelnen Zylinder möglichst wenig negativ beeinflussen.
In der Figur 5 ist der Abgaskrümmer eines Vierzylinder-Motors veranschaulicht, bei welchem jeweils zwei Abgasleitungen der jeweiligen Zylinder zu einem Strang zusammengefasst sind. So sind die Abgasleitungen 26 und 29 des ersten und des vierten Zylinders zu einem Strang zusammengefasst. Des Weiteren sind die Abgasleitungen 27 und 28 des zweiten und des dritten Zylinders zu einem Strang zusammengefasst. Die eingezeichneten Pfeile sollen die jeweiligen voneinander getrennten Abgas-Massenströme 25 verdeutlichen.

Eine Ladedruckregelung bei Abgasturboladern mit zweiflutigen Turbinengehäusen erfolgt wie bei Monoscroll-Turbinen durch Abblasen von überschüssigen Abgasen über ein Wastegate-System. Zu einer weiteren Reduzierung der Ladungswechselverluste bei Abgasturboladern mit zweiflutigen Turbinengehäusen hat sich eine schaltbare, steuerbare oder regelbare Flutenverbindung zwischen den getrennten Abgasfluten als vorteilhaft erwiesen. Dabei handelt es sich wie beim Wastegate-System um eine Ventil-Anordnung, die bei Bedarf ein Überströmen von Abgas zwischen den Abgasfluten ermöglicht. Die Verwendung eines zweiten Ventils wirkt sich allerdings nachteilig auf die Kosten und den Bauraum des Abgasturboladers aus.

Um diese Nachteile zu vermeiden ist es bereits bekannt, die Funktionalitäten von Wastegate-System und Flutenverbindung unter Verwendung einer einzigen Ventil-Anordnung zu realisieren.

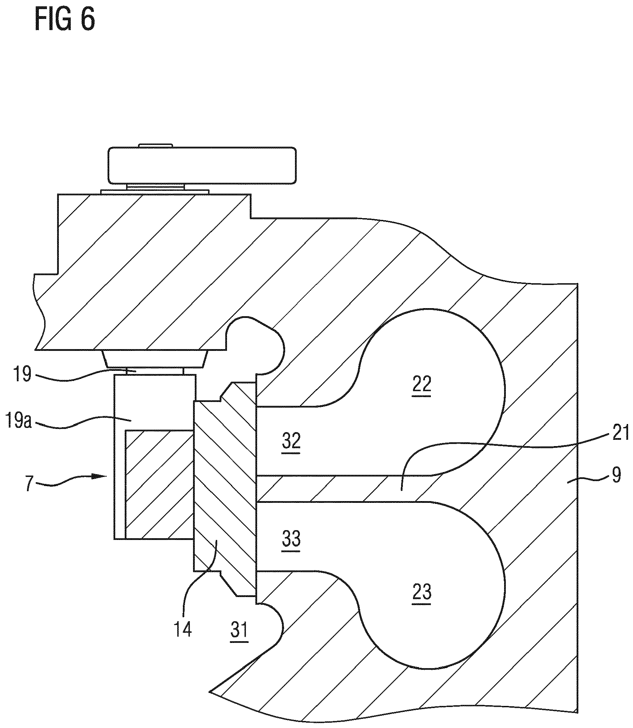

Eine mögliche Ausführungsform eines derartigen Wastegate-Systems 7 für ein zweiflutiges Turbinengehäuse 9 ist in der Figur 6 dargestellt. Aus dieser sind die beiden Abgasfluten 22 und 23 des Turbinengehäuses 9 sowie die beiden Wastegate-Auslässe 32, 33 und der Auslassraum 31 ersichtlich. Sowohl die Abgasfluten 22, 23 als auch die Wastegate-Auslässe 32, 33 sind durch eine Trennwand 21 voneinander getrennt. Somit können beide Abgasfluten über einen gemeinsamen Klappenteller14 betätigt werden, wobei bei einer Öffnung der beiden Wastegate-Auslässe 32, 33 auch zugleich die beiden Abgasfluten 22 und 23 fluidtechnisch miteinander verbunden werden. Zur Verstellung des Klappentellers 14 ist ein Schwenkarm 19a vorgesehen, welcher über die Wastegatespindel 19 rotatorisch betätigt wird. Eine solche Ventil-Anordnung kann auch als Schwenkarm-Klappenventil bezeichnet werden. Die Hauptfunktion dieser Ausführungsform ist eine Regulierung des Wastegate-Massenstroms beider Abgasfluten mit einer Ventil-Anordnung.

Aus der DE 10 2013 002 894 A1 ist eine Turbine für einen Abgasturbolader bekannt, welche ein Turbinengehäuse aufweist, in welchem zwei von Abgas durchströmbare Fluten vorgesehen sind, und welches des Weiteren einen Umgehungskanal aufweist. Ferner ist ein Ventil vorgesehen, welches im geschlossenen Zustand sowohl die Flutenverbindung als auch den Umgehungskanal sperrt und im geöffneten Zustand sowohl die Flutenverbindung als auch den Umgehungskanal öffnet. Dieses Ventil ist auch als Schwenkarm-Klappenventil gestaltet und rotatorisch bewegbar. Es weist einen um einen Drehpunkt schwenkbaren Schwenkarm auf, an dessen Endbereich ein Klappenteller befestigt ist, der durch einen, in die Ventilöffnung ragenden, kugelsegmentförmigen Ventilkörper erweitert ist.

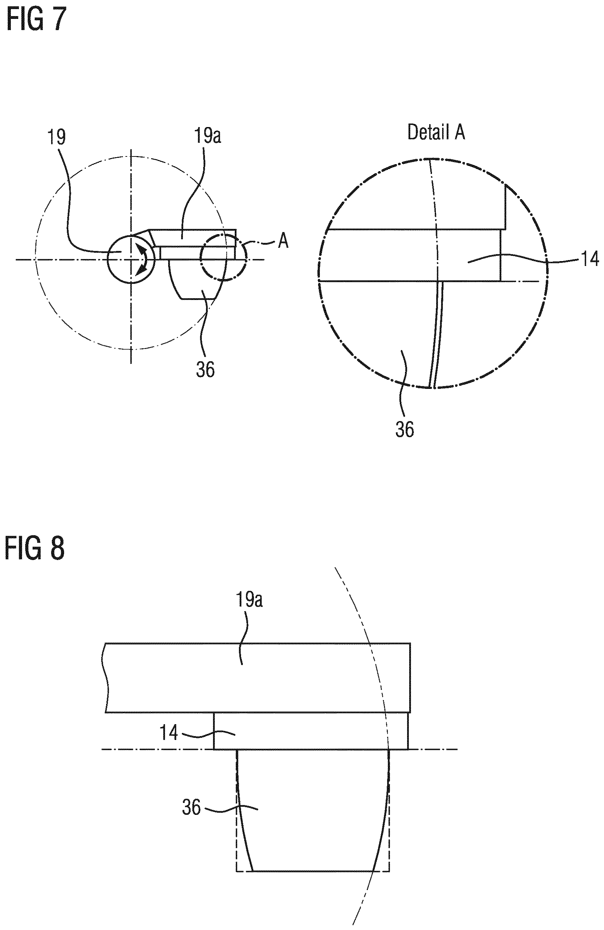

Bei Verwendung eines derartigen rotatorisch schwenkbaren Schwenkarm-Klappenventils, das zugleich als Ventilelement zur Betätigung des Wastegate-Ventils und der Flutenverbindung wirkt, besteht ein limitierter Freiheitsgrad bei der Gestaltung des Ventilkörpers. Dies wird anhand der Figuren 7 und 8 erläutert, in welchen die Bewegung eines Ventilkörpers 36 veranschaulicht ist. Aus diesen Figuren ist ersichtlich, dass die Bewegung des Ventilkörpers 36 durch einen gestrichelt dargestellten Kreis limitiert ist. Folglich muss die Außenkontur des Ventilkörpers 36 derart gewählt werden, dass der Ventilkörper 36 bei seiner Bewegung die Kreislinie nicht nach außen überschreitet. Dies hat beispielsweise den Nachteil, dass die Form des Ventilkörpers 36 nicht frei gewählt werden und zum Beispiel nicht zylinderförmig sein kann.

Des Weiteren ist aus der DE 10 2010 008 411 A1 eine Abgasturbine für einen Abgasturbolader bekannt, welche ein Turbinengehäuse aufweist, welches zwei von Abgas durchströmbare Abgasfluten und einen Bypass aufweist. Zwischen den Abgasfluten und dem Bypass ist eine translatorisch, also linear entlang einer Achse, verstellbare Ventil-Anordnung vorgesehen, die auch als Linearventil bezeichnet werden kann. In diesem speziellen Fall weist das dargestellte Linearventil als Ventilelement einen Schaft, einen topfförmigen Deckel und einen Klappenteller auf. In einer ersten Stellung dieses Linearventils sind die Abgasfluten fluidtechnisch voneinander getrennt und der Bypass geschlossen. In einer zweiten Stellung dieses Linearventils sind die Abgasfluten fluidtechnisch miteinander verbunden und der Bypass ist geschlossen. In einer dritten Stellung dieses Linearventils sind die Abgasfluten fluidtechnisch miteinander verbunden und der Bypass ist geöffnet.

Aus dem weiteren Dokument DE 20 2014 009 873 U1 ist ein mehrflutiger Abgasturbolader mit einem zweiflutigen Turbinengehäuse und einer Bypassleitung zur Umgehung des Turbinenrads bekannt, der eine Bypassventileinrichtung und eine Flutenverbindungseinrichtung aufweist und dadurch gekennzeichnet ist, dass die Bypassventileinrichtung und die Flutenverbindungseinrichtung mittels einer Koppeleinrichtung mechanisch gekoppelt betätigbar sind.

Aus dem Dokument WO 2013 135 548 A1 ist des Weiteren ein Abgasturbolader bekannt, welcher ein Wastegate-Ventil und ein Schubumluft-Ventil aufweist, die miteinander gekoppelt von einem einzigen, gemeinsamen Aktuator betätigbar sind, wobei die Betätigung des Schubumluftventils, beispielsweise über ein Dämpfungselement gekoppelt, von der Stellgeschwindigkeit des Aktuators abhängig ist.

Weiterhin offenbart das Dokument WO 2013 139 762 A1 eine Wastegate-Ventileinrichtung für einen Abgasturbolader. Bei dieser Ausführung ist zwischen einem Ventilteller und der Aktuatoreinrichtung, insbesondere in dem ein Schwenkarmventil und die Aktuatoreinrichtung verbindenden Antriebsstrang, zumindest ein Dämpfungselement vorgesehen, wodurch ein verringerter Verschleiß der Wastegate-Ventilvorrichtung sowie eine verringerte Geräuschbildung durch die Wastegate-Ventilvorrichtung gewährleistet werden soll.

Die Aufgabe der Erfindung besteht darin, eine Turbine für einen Abgasturbolader mit einem zweiflutigen Turbinengehäuse und einer als Linearventil ausgebildeten Ventil-Anordnung anzugeben, dessen Funktionalität auch bei im Betrieb auftretenden hohen Temperaturschwankungen gewährleistet ist.

Diese Aufgabe wird durch eine Turbine mit den im Anspruch 1 abgegebenen Merkmalen gelöst. Vorteilhafte Ausgestaltungen und Weiterbildungen der Erfindung sind in den abhängigen Ansprüchen angegeben.

Erfindungsgemäß wird eine Turbine für einen Abgasturbolader vorgeschlagen, mit einem Turbinengehäuse, welches zwei von einem Abgas durchströmbare Abgasfluten aufweist, zwischen denen eine Trennwand vorgesehen ist und die eine gemeinsame Wastegate-Öffnung aufweisen. Weiterhin weist die Turbine nur ein Linearventil auf, welches ein Ventilelement, zum Öffnen und Schließen der Wastegate-Öffnung hin zu einem gemeinsamen, außerhalb der Abgasfluten angeordneten Auslassraum, und einen Verstellschaft mit einer Schaft-Längsachse, zur Betätigung des Ventilelements aufweist. Dabei soll hier und im Weiteren unter dem Begriff Linearventil ein Ventil verstanden werden, das insbesondere dadurch gekennzeichnet ist, dass das Ventilelement eine geradlinige translatorische Stellbewegung vorgibt.

Die erfindungsgemäße Turbine ist dadurch gekennzeichnet, dass der Verstellschaft in Richtung einer durch die Trennwand aufgespannten Trennwandebene durch die Trennwand aus dem Turbinengehäuse heraus geführt ist und in Richtung seiner Schaft-Längsachse (also linear oder translatorisch entlang der Schaft-Längsachse) in der Trennwand beweglich angeordnet ist und dass der Verstellschaft und das Ventilelement separate Bauteile sind, die an einer Verbindungsstelle so miteinander verbunden sind, dass ein Ausgleich von Lage- und Maßtoleranzen zwischen Verstellschaft, Ventilelement und Wastegate-Öffnung im Betrieb ermöglicht ist.

Dabei kann die Verbindung zwischen Ventilelement und Verstellschaft zum Ausgleich von Lage- und Maßtoleranzen in einfacher Weise mit ausreichend Spiel gestaltet sein oder auch eine Gelenkverbindung, wie zum Beispiel ein Kugelkopflager oder ein Kardangelenk, aufweisen.

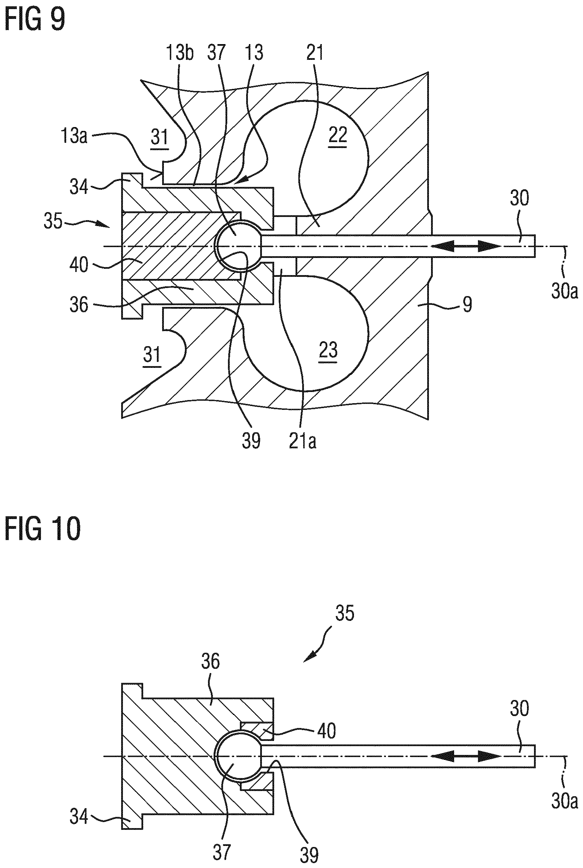

Die Vorteile einer Turbine mit den im Anspruch 1 angegebenen Merkmalen bestehen insbesondere darin, dass im Betrieb der Turbine aufgrund der Führung des Verstellschaftes des Linearventils in der Trennwand zwischen den beiden Abgasfluten eine exakte Führung des Verstellschaftes gewährleistet ist. Durch diese exakte Führung des Verstellschaftes des Ventils innerhalb der Trennwand zwischen den beiden Abgasfluten ist sichergestellt, dass zum Beispiel der Ventilteller des Ventilelements in einer ersten Ventilstellung exakt auf seinem Sitz am Ausgang der Wastegate-Öffnung aufliegt, so dass die Abgasfluten zuverlässig und vollständig fluidtechnisch voneinander getrennt sind, und dass in der zweiten Ventilstellung das Ventil vollständig geöffnet ist. Ein weiterer Vorteil der Erfindung besteht in einem verringerten Platzbedarf, da eine Führung des Verstellschaftes zumindest teilweise innerhalb der bei zweiflutigen Turbinen ohnehin vorhandenen Trennwand des Turbinengehäuses erfolgen kann. Die vorstehend genannten Vorteile werden auch beim Vorliegen hoher Temperaturen und auch bei hohen Temperaturunterschieden im Turbinengehäuse erzielt, da durch die erfindungsgemäße Verbindung des Ventilelementes mit dem Verstellschaft thermisch verursachte Verformungen des Turbinengehäuses bzw. thermisch bedingte Verzüge des Turbinengehäuses und der Ventil-Anordnung kompensiert werden. Weitere vorteilhafte Weiterbildungen und Ausführungen einer Turbine mit den im Anspruch 1 angegebenen erfindungsgemäßen Merkmalen, gemäß der Unteransprüche, sind anhand der nachfolgenden Beschreibung von Ausführungsbeispielen der Erfindung anhand der Figuren 9 bis 12 ersichtlich. Es zeigt:
- Figur 9: einen Ausschnitt des Turbinengehäuses in Schnittdarstellung zur Veranschaulichung eines ersten Ausführungsbeispiels einer erfindungsgemäße Turbine,
- Figur 10: eine Ventil-Anordnung in Schnittdarstellung zur Veranschaulichung eines weiteren Ausführungsbeispiels mit einem Ventilelement das einen Ventilteller und einen Ventilkörper aufweist,
- Figur 11: eine Ventil-Anordnung in Schnittdarstellung zur Veranschaulichung eines weiteren Ausführungsbeispiels mit einem Ventilelement das einen Ventilteller und einen Ventilkörper aufweist und
- Figur 12: eine Ventil-Anordnung in Schnittdarstellung zur Veranschaulichung eines weiteren Ausführungsbeispiels mit einem als Ventilteller ausgebildeten Ventilelement.

Funktions- und Benennungsgleiche Bauteile sind in den Figuren durchgehend mit den gleichen Bezugszeichen bezeichnet. Die dargestellten Gegenstände sind als Beispiele für unterschiedliche Ausführungen oder Weiterbildungen dieser zu verstehen und sollen weitere alternative Gestaltungen gemäß der Definition der Ansprüche nicht ausschließen.

Die Figur 9 zeigt einen Ausschnitt des Turbinengehäuses in Schnittdarstellung zur Veranschaulichung eines ersten Ausführungsbeispiels.

Bei diesem ersten Ausführungsbeispiel sind im Turbinengehäuse 9 zwei von einem Abgas-Massenstrom durchströmbare Abgasfluten 22 und 23 vorgesehen. Zwischen diesen beiden Abgasfluten befindet sich eine Trennwand 21. Des Weiteren weist das Turbinengehäuse 9 einen Auslassraum 31 auf, durch den, bei geöffneter Wastegate-Öffnung, ein Teil des Abgas-Massenstroms abgeführt wird. Ferner ist beim gezeigten Ausführungsbeispiel ein Linearventil mit einem Ventilelement 35 vorgesehen.

Das Ventilelement 35 ist aus Richtung des Auslassraumes 31 zum Verschließen der Wastegate-Öffnung 13 gegen einen Ventilsitz 13a geführt und ist mittels des Verstellschafts 30 zur Öffnung der Wastegate-Öffnung 13 in Axialrichtung der Schaft-Längsachse 30a in den Auslassraum 31 hinein vom Ventilsitz abhebbar.

Zu diesem Linearventil gehören ein Ventilelement 35 und ein Verstellschaft 30 mit einer Schaft-Längsachse 30a. Das Ventilelement 35 weist einen Ventilteller 34 und ein mit diesem fest verbundenen, hier monolithisch einstückig mit dem Ventilteller 34 ausgebildeten, Ventilkörper 36 auf, wobei der Ventilteller 34 zum Verschließen der Wastegate-Öffnung 13 durch dichte Auflage des Ventiltellers 34 auf dem die Wastegate-Öffnung 13 umgebenden Ventilsitz 13a aus Richtung des Auslassraumes 31 gegen den Ventilsitz 13a geführt ist.

Des Weiteren weist das Linearventil einen als separates Bauteil realisierten Verstellschaft 30 auf, welcher in einer durch die Trennwand 21 an dieser Stelle aufgespannte Trennwandebene durch die Trennwand 21 aus dem Turbinengehäuse 9 heraus geführt ist und innerhalb dieser Trennwand 21 in seiner Längsrichtung, also in seiner Axialrichtung beweglich geführt angeordnet ist, wie es durch den bidirektionalen Pfeil in der Figur 9 veranschaulicht sein soll.

Die Verbindungsstelle des Verstellschaftes 30 mit dem Ventilelement 35 ist hierbei im Bereich der Wastegate-Öffnung 13 des Turbinengehäuses 9 angeordnet, wobei der Verstellschaft 30 in seinem dem Ventilelement 35 zugewandten Endbereich mit einem Kugelkopf 37 ausgestattet ist, der in einer Aufnahmeöffnung 39 des Ventilkörpers 36 beweglich und ggf. spielbehaftet gelagert ist. Der Grad der Beweglichkeit und ggf. des Spiels der Lagerung ist dabei so dimensioniert, dass ein Ausgleich von Lage- und Maßtoleranzen zwischen Verstellschaft 30, Ventilelement 35 und dem Ventilsitz 12a der Wastegate-Öffnung 13 im Betrieb, also insbesondere auch bei stark erhöhten und wechselnden Temperaturen, ermöglicht ist. Zu diesem Zweck ist in dem vom Verstellschaft 30 abgewandten Endbereich des Ventilkörpers 36 eine Aufnahmeöffnung 39 vorgesehen, in welche ein Verschlusselement 40 eingesetzt ist. Das Verschlusselement 40 und der Ventilkörper 36 weisen Aussparungen auf, die in Ihrer Gesamtheit eine Kugelpfanne bilden, in welcher der Kugelkopf 37 des Verstellschaftes 30 ggf. spielbehaftet gelagert ist.

Beim Einbau des Linearventils in das Turbinengehäuse 9 wird zunächst der Verstellschaft 30, dessen Abschluss der Kugelkopf 37 bildet, in der Figur von links nach rechts in die Aufnahmeöffnung 39 des Ventilkörpers 36 eingesetzt und dann durch die in der Trennwand 21 in Trennwandebene verlaufende Bohrung geschoben. Zu einem späteren Zeitpunkt erfolgt dann das Verschließen der Aufnahmeöffnung 39 des Ventilkörpers 36 beispielsweise durch ein Einpressen des Verschlusselements 40 in die Aufnahmeöffnung 39.

Durch diese in bestimmtem Maß bewegliche Verbindung des Verstellschaftes 30 mit dem Ventilelement 35, das aus Ventilkörper 36 und Ventilteller 34 besteht, die fest miteinander verbunden sind oder eine monolithische, einstückige Baueinheit bilden, können im Betrieb des Abgasturboladers auftretende thermisch bedingte Verformungen bzw. Verzüge des Turbinengehäuses 9 und der Ventil-Anordnung ausgeglichen werden. Dies ist insbesondere dann vorteilhaft, wenn zwischen der Temperatur, die das Turbinengehäuse im Bereich der Trennwand 21 hat, und der Temperatur, die das Turbinengehäuse im Bereich der Wastegate-Öffnung 13 und insbesondere im Bereich des Ventilsitzes 13a der Wastegate-Öffnung 13 hat, große Unterschiede bestehen, da in diesem Falle das Turbinengehäuse in den genannten Bereichen unterschiedlich stark verformt werden kann bzw. sich unterschiedlich stark verziehen kann.

Bei dem in der Figur 9 gezeigten Ausführungsbeispiel wird die fluidtechnische Verbindung der beiden Abgasfluten 22, 23 und die Freigabe der Wastegate-Öffnung 13 des Wastegate-Systems nicht durch rotatorische Bewegung unter Verwendung einer an einem Schwenkarm angebrachte Klappe, sondern durch translatorische, also lineare Bewegung unter Verwendung eines Linearventils herbeigeführt. Dabei wird der Verstellschaft 30 dieses Linearventils zentrisch zur Wastegate-Öffnung 13 in der Trennwand 21 zwischen den beiden Abgasfluten 22, 23 geführt. Vorzugsweise verläuft die Bohrung in der Trennwand 21, durch welche der Verstellschaft 30 geführt ist, in einer durch die Trennwand 21 an dieser Stelle aufgespannte Trennwandebene, mittig in der und durch die Trennwand 21 (also nicht quer oder senkrecht zur Trennwandebene).

Der Ventilkörper 36 ist vorzugsweise zylindrisch ausgeführt und weist einen geringfügig kleineren Durchmesser als die Wastegate-Öffnung 13, in der er angeordnet ist, auf. Dies wird vor Allem ermöglicht durch den linearen, translatorischen Öffnungshub des Linearventils. Diese zylindrische Ausführung ist besonders vorteilhaft, da bei einem Öffnen des Linearventils, wenn zunächst der Ventilteller 34 vom Ventilsitz 13a abhebt, zunächst nur ein vorgegebener kleiner Wastegate-Querschnitt, in Form eines Ringspaltes 13b zwischen Ventilkörper 36 und Wastegate-Öffnung 13a, freigegeben wird. Bei einem weiteren Öffnen des Linearventils bleibt der freigegebene Wastegate-Querschnitt aufgrund des gleichbleibenden Ringspalts 13b zwischen der Wastegate-Öffnung des Turbinengehäuses 9 und dem Ventilkörper 36 zunächst konstant. Erst wenn der Ventilkörper 36 vollständig aus der Wastegate-Öffnung des Turbinengehäuses 9 hinausgeschoben ist, wird der freigegebene Wastegate-Querschnitt vergrößert. Auch andere Geometrien, zum Beispiel kegelform, konusform oder halbkugelform, des Ventilkörpers 36 können hier zum Einsatz kommen, die ein anderes Öffnungsverhalten des Wastegate-Querschnitts über den linearen Öffnungshub des Ventilelements 35 ergeben.

In der geschlossenen Stellung des Ventilelements 35 ist der Ventilkörper 36 in einer Trennwand-Aussparung 21a angeordnet. Diese Trennwand-Aussparung 21a stellt in einer geöffneten Stellung des Ventilelements 35 eine Verbindung zwischen den Abgasfluten 22, 23 dar. In der geschlossenen Stellung des Ventilelements 35, wenn der Ventilkörper 36 im Grund der Trennwand-Aussparung 21a dichtend aufliegt, ist die Trennwand-Aussparung 21a durch den Ventilkörper 36 versperrt und die beiden Abgasfluten 22, 23 sind fluidtechnisch voneinander getrennt. Beim Öffnen des Linearventils hebt der Ventilkörper 36 vom Grund der Trennwand-Aussparung 21a ab und gibt mit fortschreitender Öffnung einen größer werdenden Flutenverbindungsquerschnitt frei. Dabei verläuft die flächenmäßige Vergrößerung des Flutenverbindungsquerschnitts zum Beispiel linear ansteigend über dem Öffnungshub des Ventilelements 35 des Linearventils.

Durch die Verwendung eines Linearventils ergeben sich weitere Vorteile, die in reduzierten Kosten aufgrund einer Verwendung von weniger Einzelteilen und weniger Fügevorgängen, einem reduzierten Bauraumbedarf und einem größeren Freiheitsgrad bei der Gestaltung des Ventilkörpers bestehen.

Die Figur 10 zeigt eine Ventil-Anordnung in Schnittdarstellung zur Veranschaulichung eines weiteren Ausführungsbeispiels mit einem Ventilelement das einen Ventilteller und einen Ventilkörper aufweist und welche anstelle der in der Figur 9 gezeigten Ventil-Anordnung verwendet werden kann.

Zu dem in der Figur 10 dargestellten Linearventil gehört ein Ventilelement 35 mit einem Ventilteller 34 und einem mit diesem fest verbundenen oder monolithisch einstückig ausgebildeten Ventilkörper 36. Des Weiteren weist das Linearventil einen als separates Bauteil realisierten Verstellschaft 30 auf, welcher in gleicher Weise wie zu Figur 9 beschrieben in der Trennwand 21 des Turbinengehäuses 9 angeordnet ist und innerhalb dieser Trennwand in seiner Längsrichtung beweglich geführt ist, wie es durch den bidirektionalen Pfeil in der Figur 10 veranschaulicht ist.

Der Verstellschaft 30 ist in seinem dem Ventilelement 35 zugewandten Endbereich mit einem Kugelkopf 37 ausgestattet, der in einer Aufnahmeöffnung 39 des Ventilkörpers 36 beweglich gelagert ist. Zu diesem Zweck ist in dem, dem Verstellschaft 30 zugewandten Endbereich des Ventilkörpers 36 eine Aufnahmeöffnung 39 vorgesehen, in welche ein Verschlusselement 40 eingesetzt ist. Das Verschlusselement 40 und der Ventilkörper 36 weisen Aussparungen auf, die in Ihrer Gesamtheit eine Kugelpfanne, zur Aufnahme des Kugelkopfes 37 des Verstellschafts 30, bilden, in welcher der Kugelkopf 37 des Verstellschaftes 33 begrenzt beweglich und ggf. spielbehaftet gelagert ist.

Beim Einbau der Ventil-Anordnung in das Turbinengehäuse 9 wird zunächst der Verstellschaft 30, dessen Abschluss der Kugelkopf 37 bildet, durch die Bohrung der Zwischenwand 21 geschoben. Danach erfolgt ein Aufschieben des Ventilkörpers 36 inklusive des Ventiltellers 34 auf den Kugelkopf 37 und schließlich ein Verschließen der Aufnahmeöffnung 39 mittels des Verschlusselementes 40, welches bereits vor dem Einschieben des Verstellschaftes 30 durch die Bohrung der Trennwand 21 lose um den Verstellschaft 30 gelegt wurde. Dieses Verschließen der Aufnahmeöffnung 39 erfolgt beispielsweise durch ein Einpressen des Verschlusselements 40 in die Aufnahmeöffnung 39. Dies erfolgt derart, dass bei eingepresstem Verschlusselement 40 dennoch zwischen dem Verstellschaft 33, dessen Abschluss der Kugelkopf 37 bildet, und dem Ventilkörper 36 sowohl in Axialrichtung des Verstellschaftes 30 als auch in Radialrichtung des Verstellschaftes 30 zumindest so viel Spiel besteht, dass die gewünschte Beweglichkeit der Verbindung gewährleistet ist.

Durch diese bewegliche und ggf. spielbehaftete Verbindung des Verstellschaftes 30 mit dem Ventilelement 35, können im Betrieb des Abgasturboladers auftretende thermisch bedingte Verformungen bzw. Verzüge des Turbinengehäuses 9 ausgeglichen werden. Dies ist insbesondere dann vorteilhaft, wenn zwischen der Temperatur, die das Turbinengehäuse im Bereich der Trennwand 21 hat, und der Temperatur, die das Turbinengehäuse im Bereich der Wastegate-Öffnung 13 und insbesondere im Bereich des Ventilsitzes 13a der Wastegate-Öffnung 13 hat, große Unterschiede bestehen, da in diesem Falle das Turbinengehäuse in den genannten Bereichen unterschiedlich stark verformt werden kann bzw. sich unterschiedlich stark verziehen kann.

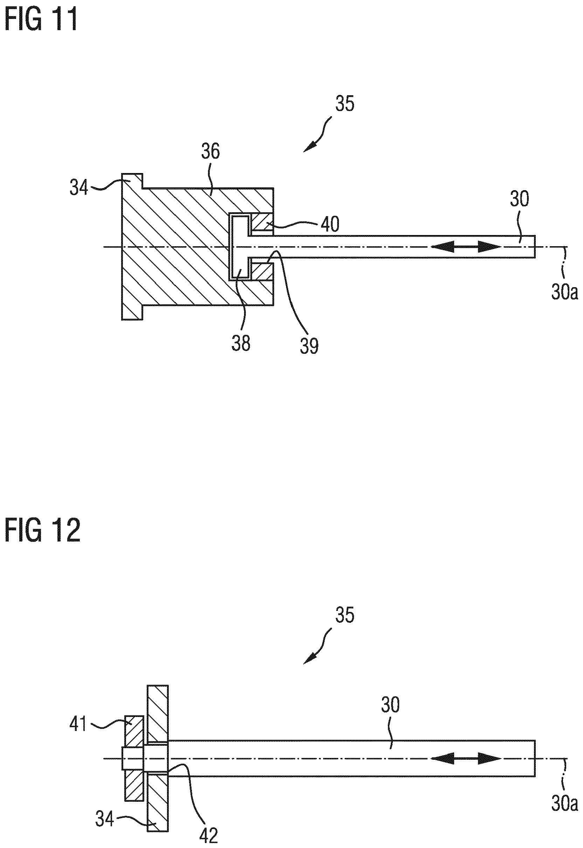

Die Figur 11 zeigt eine Ventil-Anordnung in Schnittdarstellung zur Veranschaulichung eines weiteren Ausführungsbeispiels mit einem Ventilelement das einen Ventilteller und einen Ventilkörper aufweist.

Zu dem in der Figur 11 dargestellten Linearventil gehört ein Ventilelement 35, das einen Ventilteller 34 und einen mit diesem fest verbundenen oder monolithisch, einstückig ausgebildeten Ventilkörper 36 aufweist. Des Weiteren weist das Linearventil einen als separates Bauteil realisierten Verstellschaft 30 auf, welcher, in gleicher Weise wie zu Figur 9 beschrieben, in der Trennwand 21 des Turbinengehäuses 9 angeordnet ist und innerhalb dieser Trennwand in seiner Längsrichtung translatorisch, linear beweglich geführt ist, wie es durch den bidirektionalen Pfeil in der Figur 11 veranschaulicht ist.

Der Verstellschaft 30 ist in seinem dem Ventilelement 35 zugewandten Endbereich mit einem Scheibenkopf 38 ausgestattet, der in einer Aufnahmeöffnung 39 des Ventilkörpers 36 spielbehaftet gelagert ist. Als Scheibenkopf 38 wird hier eine scheibenförmige radiale Erweiterung des Endbereichs des Verstellschafts 30 bezeichnet. Zu Verbindung des Verstellschafts 30 mit dem Ventilelement 35 ist in dem, dem Verstellschaft 30 zugewandten, Endbereich des Ventilkörpers 36 eine Aufnahmeöffnung 39 vorgesehen, in welche der Scheibenkopf 38 und ein Verschlusselement 40 eingesetzt ist, wobei der Scheibenkopf 38 inklusive des daran anschließenden Bereiches des Verstellschaftes 30 in der Aufnahmeöffnung 39 zwischen dem Ventilkörper 36 und dem Verschlusselement 40 spielbehaftet gelagert ist. Dieses Spiel besteht sowohl in Axialrichtung des Verstellschaftes 30 als auch in Radialrichtung des Verstellschaftes 30 und ist so dimensioniert, dass der Ventilkörper 35 gegenüber dem Verstellschaft 30 in einem Maß beweglich ist, dass ein Ausgleich von Lage- und Maßtoleranzen zwischen Verstellschaft 30, Ventilelement 35 und Wastegate-Öffnung 13 im Betrieb ermöglicht ist.

Beim Einbau der Ventil-Anordnung in das Turbinengehäuse 9 ist in gleicher Weise vorzugehen wie dies bereits zu dem Ausführungsbeispiel der Figur 10 beschrieben wurde. Dies erfolgt auch hier derart, dass bei eingepresstem Verschlusselement 40 dennoch zwischen dem Scheibenkopf 38 des Verstellschafts 30 und dem Ventilkörper 36 sowohl in Axialrichtung des Verstellschaftes 30 als auch in Radialrichtung des Verstellschaftes 30 für den Toleranzausgleich ausreichende Beweglichkeit besteht.

Durch diese durch entsprechendes Spiel bewegliche Verbindung des Verstellschaftes 30 mit dem Ventilelement 35, können im Betrieb des Abgasturboladers auftretende thermisch bedingte Verformungen bzw. Verzüge des Turbinengehäuses 9 ausgeglichen werden. Dies ist insbesondere dann vorteilhaft, wenn zwischen der Temperatur, die das Turbinengehäuse im Bereich der Trennwand 21 hat, und der Temperatur, die das Turbinengehäuse im Bereich der Wastegate-Öffnung 13 und insbesondere im Bereich des Ventilsitzes 13a der Wastegate-Öffnung 13 hat, große Unterschiede bestehen, da in diesem Falle das Turbinengehäuse in den genannten Bereichen unterschiedlich stark verformt werden kann bzw. sich unterschiedlich stark verziehen kann.

Die Figur 12 zeigt eine Ventil-Anordnung in Schnittdarstellung zur Veranschaulichung eines weiteren sehr einfachen Ausführungsbeispiels mit einem als Ventilteller 34 ausgebildeten Ventilelement, welche in ähnlicher Weise wie die in der Figur 6 gezeigte Ventil-Anordnung anstelle des Schwenkarm-Klappenventils verwendet werden kann.

Zu der in der Figur 12 dargestellten Ventil-Anordnung gehören ein Ventilteller 34 und ein als separates Bauteil realisierter Verstellschaft 30, welcher in gleicher Weise wie in den Beispielen der Figuren 9 bis 11 dargestellten Ausführungsbeispiele in der Trennwand 21 des Turbinengehäuses 9 angeordnet und aus dem Turbinengehäuse 9 heraus geführt ist und innerhalb dieser Trennwand in seiner Längsrichtung beweglich geführt ist, wie es durch den bidirektionalen Pfeil in der Figur 12 veranschaulicht ist.

Die in Figur 12 gezeigte Ausführung zeichnet sich dadurch aus, dass der Verstellschaft 30 in seinem, hier lediglich als Ventilteller 34 ausgebildeten, dem Ventilelement zugewandten Endbereich eine Stufe 42 und ein mit dem Verstellschaft 30 fest verbundenes Abschlusselement 41 aufweist, wobei das als Ventilteller 34 ausgebildete Ventilelement zwischen dem Abschlusselement 41 und der Stufe 42 des Verstellschaftes 30 in Radial- und Axialrichtung des Verstellschaftes 30 spielbehaftet gelagert ist. Bei dem genannten Abschlusselement 41 handelt es sich beispielsweise um eine Nietscheibe. In dem Axialbereich des Verstellschaftes 30, in welchem der Ventilteller 34 positioniert ist, ist der Verstellschaft 30 derart verjüngt ausgebildet, so dass im Übergangsbereich zu diesem verjüngten Bereich eine Stufe 42 ausgebildet ist. Der Ventilteller 34 ist in diesem verjüngten Bereich des Verstellschaftes 30 spielbehaftet zwischen dem Verstellschaft 30 und dem Abschlusselement 41 gelagert, wobei dieses Spiel sowohl in Axialrichtung des Verstellschaftes 30 als auch in Radialrichtung des Verstellschaftes 30 besteht.

Durch diese spielbehaftete Verbindung des Verstellschaftes 30 mit dem Ventilteller 34 können im Betrieb des Abgasturboladers auftretende thermisch bedingte Verformungen bzw. Verzüge des Turbinengehäuses 9 ausgeglichen werden, so dass der Ventilteller 34 bei geschlossenem Linearventil in jedem Fall eben und dichtend auf dem Ventilsitz 13a der Wastegate-Öffnung 13 zur Anlage kommt.

## Patentansprüche

1. Turbine (3) für einen Abgasturbolader (2) mit einem Turbinengehäuse (9), welches zwei von einem Abgas durchströmbare Abgasfluten (22, 23) aufweist, zwischen denen eine Trennwand (21) vorgesehen ist und die eine gemeinsame Wastegate-Öffnung (13) aufweisen, und
mit nur einem Linearventil, welches ein Ventilelement (35), zum Öffnen und Schließen der Wastegate-Öffnung (13)hin zu einem gemeinsamen, außerhalb der Abgasfluten (22, 23) angeordneten Auslassraum (31), und einen Verstellschaft (30) mit einer Schaft-Längsachse (30a), zur Betätigung des Ventilelements aufweist,
**dadurch gekennzeichnet, dass** der Verstellschaft (30) in Richtung einer durch die Trennwand aufgespannten Trennwandebene durch die Trennwand (21) aus dem Turbinengehäuse (9) heraus geführt ist und in Richtung seiner Schaft-Längsachse (30a) in der Trennwand (21) beweglich geführt angeordnet ist und
dass der Verstellschaft (30) und das Ventilelement (35) separate Bauteile sind, die an einer Verbindungsstelle so miteinander verbunden sind, dass ein Ausgleich von Lage- und Maßtoleranzen zwischen Verstellschaft (30), Ventilelement (35) und Wastegate-Öffnung (13) im Betrieb ermöglicht ist.

2. Turbine nach Anspruch 1, **dadurch gekennzeichnet, dass** das Ventilelement (35) aus Richtung des Auslassraumes (31) zum Verschließen der Wastegate-Öffnung (13) gegen einen Ventilsitz (13a) geführt ist und mittels des Verstellschafts (30) zur Öffnung der Wastegate-Öffnung (13) in Axialrichtung der Schaft-Längsachse (30a) in den Auslassraum (31) hinein vom Ventilsitz abhebbar ist.

3. Turbine nach Anspruch 1, **dadurch gekennzeichnet, dass** die Verbindungsstelle des Verstellschaftes (30) mit dem Ventilelement (35) im Bereich der Wastegate-Öffnung (13) des Turbinengehäuses (9) angeordnet ist.

4. Turbine nach Anspruch 1 oder 2, **dadurch gekennzeichnet, dass** das Ventilelement (35) einen Ventilteller (34) und einen damit verbundenen zwischen dem Verstellschaft (30) und dem Ventilteller (34) angeordneten Ventilkörper (36) aufweist, wobei der Ventilteller (34) zum Verschließen der Wastegate-Öffnung (13) durch dichte Auflage des Ventiltellers (34) auf dem die Wastegate-Öffnung (13) umgebenden Ventilsitz (13a) aus Richtung des Auslassraumes (31) gegen den Ventilsitz (13a) geführt ist und die Verbindungstelle des Verstellschaftes (33) mit dem Ventilelement (35) im Ventilkörper (36) angeordnet ist.

5. Turbine nach Anspruch 4, **dadurch gekennzeichnet, dass** der Ventilteller (34) und der Ventilkörper (36) in einem einstückig ausgebildeten Bauteil zusammengefasst sind.

6. Turbine nach Anspruch 4, **dadurch gekennzeichnet, dass** der Verstellschaft (30) in seinem dem Ventilelement (35) zugewandten Endbereich einen Kugelkopf (37) oder einen Scheibenkopf (38) aufweist, der in einer korrespondierenden Aufnahmeöffnung (39) des Ventilkörpers (36) beweglich gelagert ist.

7. Turbine nach Anspruch 6, **dadurch gekennzeichnet, dass** die Aufnahmeöffnung (39) des Ventilkörpers (36) mittels eines Verschlusselementes (40) verschlossen ist.

8. Turbine nach Anspruch 7, **dadurch gekennzeichnet, dass** das Verschlusselement (40) in einem, von dem Verstellschaft (30) abgewandten, Endbereich des Ventilkörpers (36) angeordnet ist.

9. Turbine nach Anspruch 7, **dadurch gekennzeichnet, dass** das Verschlusselement (40) in einem, dem Verstellschaft (30) zugewandten, Endbereich des Ventilkörpers (36) positioniert ist.

10. Turbine nach einem der Ansprüche 1 bis 3, **dadurch gekennzeichnet, dass** der Verstellschaft (30) in seinem, dem Ventilelement (35) zugewandten, Endbereich eine Stufe (42) und ein mit dem Verstellschaft (30) fest verbundenes Abschlusselement (41) aufweist, wobei ein als Ventilteller (34) ausgebildetes Ventilelement (35) zwischen dem Abschlusselement (41) und der Stufe (42) des Verstellschaftes (30) in Radial- und Axialrichtung des Verstellschaftes (30) spielbehaftet gelagert ist.

## Claims

1. Turbine (3) for an exhaust gas turbocharger (2) with a turbine housing (9) which has two exhaust gas manifolds (22, 23), through which an exhaust gas can flow, between which a dividing wall (21) is provided, and which have a common wastegate opening (13), and with only one linear valve which has a valve element (35), for opening and closing the wastegate opening (13) towards a common outlet space (31) which is arranged outside the exhaust gas manifolds (22, 23), and an adjustment shank (30) with a shank longitudinal axis (30a), for the adjustment of the valve element, **characterized in that** the adjustment shank (30) is routed out of the turbine housing (9) through the dividing wall (21) in the direction of a dividing wall plane which is defined by way of the dividing wall, and is arranged such that it can be moved in the dividing wall (21) in the direction of its shank longitudinal axis (30a), and **in that** the adjustment shank (30) and the valve element (35) are separate components which are connected to one another at a connecting point in such a way that a compensation of positional and dimensional tolerances is made possible between the adjustment shank (30), the valve element (35) and the wastegate opening (13) during operation.

2. Turbine according to Claim 1, **characterized in that** the valve element (35) is guided against a valve seat (13a) from the direction of the outlet space (31) in order to close the wastegate opening (13), and can be lifted from the valve seat by means of the adjustment shank (30) in the axial direction of the shank longitudinal axis (30a) into the outlet space (31) in order to open the wastegate opening (13).

3. Turbine according to Claim 1, **characterized in that** the connecting point of the adjustment shank (30) to the valve element (35) is arranged in the region of the wastegate opening (13) of the turbine housing (9).

4. Turbine according to Claim 1 or 2, **characterized in that** the valve element (35) has a valve head (34) and a valve body (36) which is connected to the former and is arranged between the adjustment shank (30) and the valve head (34), the valve head (34) being guided against the valve seat (13a) from the direction of the outlet space (31) in order to close the wastegate opening (13) by way of tight bearing of the valve head (34) on the valve seat (13a) which surrounds the wastegate opening (13), and the connecting point of the adjustment shank (33) to the valve element (35) being arranged in the valve body (36) .

5. Turbine according to Claim 4, **characterized in that** the valve head (34) and the valve body (36) are combined in a component of single-piece configuration.

6. Turbine according to Claim 4, **characterized in that**, in its end region which faces the valve element (35), the adjustment shank (30) has a spherical head (37) or a disc head (38) which is mounted movably in a corresponding receiving opening (39) of the valve body (36).

7. Turbine according to Claim 6, **characterized in that** the receiving opening (39) of the valve body (36) is closed by means of a closure element (40).

8. Turbine according to Claim 7, **characterized in that** the closure element (40) is arranged in an end region of the valve body (36), which end region faces away from the adjustment shank (30).

9. Turbine according to Claim 7, **characterized in that** the closure element (40) is positioned in an end region of the valve body (36), which end region faces the adjustment shank (30) .

10. Turbine according to one of Claims 1 to 3, **characterized in that**, in its end region which faces the valve element (35), the adjustment shank (30) has a step (42) and a terminating element (41) which is connected fixedly to the adjustment shank (30), a valve element (35) which is configured as a valve head (34) being mounted with play in the radial and axial direction of the adjustment shank (30) between the terminating element (41) and the step (42) of the adjustment shank (30).

## Revendications

1. Turbine (3) pour un turbocompresseur (2), comprenant un carter de turbine (9) qui présente deux volutes de gaz d'échappement (22, 23) pour le passage des gaz d'échappement, entre lesquelles une cloison (21) est prévue et qui présentent une ouverture de soupape de décharge (13) commune, et comprenant une seule soupape linéaire qui présente un élément de soupape (35) pour ouvrir et fermer l'ouverture de soupape de décharge (13) vers une chambre de sortie (31) commune, disposée en dehors des volutes de gaz d'échappement (22, 23), et une tige de réglage (30) dotée d'un axe longitudinal de tige (30a) pour actionner l'élément de soupape,
**caractérisée en ce que** la tige de réglage (30) est guidée en direction d'un plan de cloison formé par la cloison à travers la cloison (21) hors du carter de turbine (9) et est disposée dans la cloison (21) en étant guidée de manière mobile dans la direction de son axe longitudinal de tige (30a), et
**en ce que** la tige de réglage (30) et l'élément de soupape (35) sont des composants séparés qui sont reliés l'un à l'autre au niveau d'une jonction de façon à permettre, en cours de fonctionnement, une compensation des tolérances de position et de dimension entre la tige de réglage (30), l'élément de soupape (35) et l'ouverture de soupape de décharge (13).

2. Turbine selon la revendication 1, **caractérisée en ce que** l'élément de soupape (35) est guidé depuis la direction de la chambre de sortie (31) pour fermer l'ouverture de soupape de décharge (13) contre un siège de soupape (13a), et peut être décollé dans la direction axiale de l'axe longitudinal de tige (30a) à l'intérieur de la chambre de sortie (31) au moyen de la tige de réglage (30) pour ouvrir l'ouverture de soupape de décharge (13).

3. Turbine selon la revendication 1, **caractérisée en ce que** la jonction entre la tige de réglage (30) et l'élément de soupape (35) est disposée au niveau de l'ouverture de soupape de décharge (13) du carter de turbine (9).

4. Turbine selon la revendication 1 ou 2, **caractérisée en ce que** l'élément de soupape (35) présente une tête de soupape (34) et un corps de soupape (36) relié à celle-ci et disposé entre la tige de réglage (30) et la tête de soupape (34), dans laquelle la tête de soupape (34) est guidée depuis la direction de la chambre de sortie (31) contre le siège de soupape (13a) pour fermer l'ouverture de soupape de décharge (13) par une application étanche de la tête de soupape (34) sur le siège de soupape (13a) entourant l'ouverture de soupape de décharge (13), et la jonction entre la tige de réglage (33) et l'élément de soupape (35) est disposée dans le corps de soupape (36).

5. Turbine selon la revendication 4, **caractérisée en ce que** la tête de soupape (34) et le corps de soupape (36) sont regroupés dans un composant réalisé d'un seul tenant.

6. Turbine selon la revendication 4, **caractérisée en ce que** la tige de réglage (30) présente dans sa zone d'extrémité tournée vers l'élément de soupape (35) une tête sphérique (37) ou une tête en disque (38) qui est montée mobile dans une ouverture de logement correspondante (39) du corps de soupape (36) .

7. Turbine selon la revendication 6, **caractérisée en ce que** l'ouverture de logement (39) du corps de soupape (36) est fermée au moyen d'un élément de fermeture (40).

8. Turbine selon la revendication 7, **caractérisée en ce que** l'élément de fermeture (40) est disposé dans une zone d'extrémité du corps de soupape (36), détournée de la tige de réglage (30).

9. Turbine selon la revendication 7, **caractérisée en ce que** l'élément de fermeture (40) est positionné dans une zone d'extrémité du corps de soupape (36), tournée vers la tige de réglage (30).

10. Turbine selon l'une quelconque des revendications 1 à 3, **caractérisée en ce que** la tige de réglage (30) présente dans sa zone d'extrémité, tournée vers l'élément de soupape (35), un gradin (42) et un élément de terminaison (41) relié solidement à la tige de réglage (30), dans laquelle un élément de soupape (35), réalisé sous la forme d'une tête de soupape (34), est monté avec du jeu entre l'élément de terminaison (41) et le gradin (42) de la tige de réglage (30) dans la direction radiale et la direction axiale de la tige de réglage (30).
